(19) Europäisches Patentamt
European Patent Office
Office européen des brevets

(11) **EP 1 408 006 A1**

(12) **DEMANDE DE BREVET EUROPEEN**

(43) Date de publication:
**14.04.2004 Bulletin 2004/16**

(51) Int Cl.⁷: **C01D 3/14**, C01B 7/09,
C01B 9/04, C02F 1/10,
C02F 1/66, B01D 11/02,
B01D 3/38

(21) Numéro de dépôt: **03292119.9**

(22) Date de dépôt: **28.08.2003**

(84) Etats contractants désignés:
**AT BE BG CH CY CZ DE DK EE ES FI FR GB GR
HU IE IT LI LU MC NL PT RO SE SI SK TR**
Etats d'extension désignés:
**AL LT LV MK**

(30) Priorité: **26.09.2002 FR 0211927**

(71) Demandeur: **Atofina**
**92800 Puteaux (FR)**

(72) Inventeur: **Leduc, Philippe**
**69440 Saint Sorlin (FR)**

(54) **Procédé d'abaissement de la teneur en matières organiques et produits azotés contenus dans des effluents bromurés**

(57) L'invention concerne un procédé d'abaissement de la teneur en matières organiques et en produits azotés contenus dans un effluent bromé liquide au solide qui consiste à soumettre ledit effluent à un ou plusieurs traitement physico-chimiques choisi parmi :

(a) l'acidification d'une solution aqueuse bromurée ou d'une solution obtenue par mise en solution si l'effluent bromuré est solide suivi d'un entraînement à la vapeur des composés organiques légers ;
(b) la basification de la solution obtenue en a) ou bien de la solution aqueuse bromurée initiale obtenue par mise en solution si l'effluent bromuré est solide suivi d'un entraînement à la vapeur des composés organiques aminés légers et/ou de $NH_3$ ;
(c) l'entraînement à la vapeur de composés organiques légers de la solution aqueuse obtenue en a), ou bien de la solution obtenue en b), ou bien d'une solution bromurée initiale obtenue par mise en solution si l'effluent est solide, sans modification de pH ;
(d) le lavage d'un effluent bromuré solide à traiter ou bien d'un solide provenant de l'évaporation d'une solution aqueuse bromurée résultant d'un ou plusieurs traitement(s) précédent(s), avec un solvant organique, filtration de la suspension obtenue, lavage et séchage du gâteau obtenu.

EP 1 408 006 A1

**Description**

La présente invention concerne un procédé d'abaissement de la teneur en matières organiques et en produits azotés contenus dans des effluents bromurés en vue de leur valorisation notamment en brome élémentaire.

Les composés organiques bromés sont couramment utilisés comme intermédiaires dans la fabrication d'autres molécules organiques.

Par exemple, l'industrie pharmaceutique utilise de nombreux composés organobromés (bromures d'alkyle, bromoacides et bromoesters), comme intermédiaire de synthèse notamment pour greffer la partie organique du composé organobromé sur une autre molécule. Ainsi, un composé organobromé RBr peut réagir avec un nucléophile Nu qui déplace le brome pour conduire à un composé organique substitué avec le nucléophile plus un bromure $Br^-$ comme sous-produit selon le schéma réactionnel :

$$RBr + M^+ + Nu^- \rightarrow RNu + M^+ + Br^-$$

où $Nu^-$ est un anion nucléophile,
$M^+$ est soit un métal alcalin (Li, Na, K) ou $NH^+_4$ soit un ion hydrogène

Le brome ne sert en fait que d'agent de transfert et se retrouve généralement sous forme de bromures alcalins dans les effluents de l'atelier.

Les utilisateurs de composés organobromés se trouvent donc confrontés à un problème de rejet des effluents, liés à la fois à la nature même desdits effluents qui sont généralement des solutions aqueuses bromurées contenant des bromures alcalins, des bromures d'ammonium voire d'HBr, et également aux composés organiques polluants qu'ils contiennent.

La teneur en composé organiques dans lesdits effluents bromurés est exprimée en carboné organique Total ou COT. Ces composés organiques peuvent être des acides, des amines, des alcools, des solvants, des sels d'ammonium. Une teneur trop élevée de ces matières organiques dans les effluents bromurés est rédhibitoire lorsque l'on veut récupérer les bromures contenus dans lesdits effluents sous forme brome élémentaire par les méthodes conventionnelles telles que la méthode d'oxydation par le chlore selon un procédé dit "steaming-out" développé par K. KUBIERSCHKY, ("Bromine and its compounds", édité par Z.Z. JOLLES ; ERNEST BENN LIMITED, pages 20 à 24, London 1966).

Cette méthode consiste à mettre en contact une solution aqueuse bromurée avec du chlore gazeux.

Cette réaction est généralement réalisée dans une tour garnie (tour à brome), dans laquelle une solution aqueuse bromurée est mise en contact avec du chlore et de la vapeur d'eau. Le chlore réagit avec l'ion bromure Br- pour produire du brome élémentaire $Br_2$ et

un ion chlorure selon la réaction :

$$2Br^- + Cl_2 \rightarrow Br_2 + 2Cl^-$$

Un mélange de brome, chlore et vapeur d'eau sort au sommet de la tour et est refroidi pour condenser le brome.

Cependant, si la solution aqueuse bromurée mise en oeuvre contient des matières organiques, ces dernières risquent de polluer le brome libéré.

En plus, la présence de matières organiques oxydables et/ou de matières organiques azotées peut entraîner des risques d'explosivité (formation notamment de NBr3, explosif).

Enfin, une teneur trop élevée en matières organiques dans les solutions bromurées risque de conduire à la formation de produits solides pouvant entraîner des bouchages dans l'installation.

D'où la nécessité d'abaisser le plus possible la teneur en matières organiques et en composés azotés des effluents bromurés à valoriser.

Il a été proposé d'autres solutions pour régénérer le brome élémentaire de solutions aqueuses bromurées contenant des matières organiques.

Ainsi, le brevet US 5,385,650 propose un procédé qui consiste à effectuer l'électrolyse de solutions aqueuses acides bromurées contenant des matières organiques (COT pouvant atteindre 3 650 ppm).

Pour ce faire, on alimente une cellule d'électrolyse à 2 compartiments avec une solution aqueuse acide bromurée fonctionnant à une température au plus égale à 95°C, avec une densité de courant comprise entre 1 et 4 $kAm^{-2}$.

Le brome, libéré à l'anode, est récupéré sous forme vapeur de l'anolyte sous pression réduite.

Cette façon d'opérer présente de nombreux inconvénients.

Compte tenu de la grande solubilité du brome dans les solutions aqueuses bromurées, il est difficile de récupérer la totalité du brome formé.

En outre, l'oxydation des matières organiques à l'anode consomme des quantité de courant importantes. Ainsi, par exemple, dans l'exemple 1 du brevet US 5,385,650, on constate que la présence de matières organiques (2250 ppm de COT) dans la solution aqueuse bromurée à traiter fait chuter l'efficacité du courant pour la génération du brome de 9 % pour une réduction du COT de 23 %.

La présence de matières organiques non volatiles, oxydables donc consommatrices d'énergie, susceptibles d'interagir avec le brome nécessitent également de faire des purges afin de les éliminer du compartiment anodique.

Une autre solution consiste à séparer les bromures des matières organiques par électrodialyse, mais les membranes ont une tenue limitée en présence des composés organiques et il y a un risque important de bouchages et/ou colmatages.

Les impuretés organiques peuvent être également oxydées en $CO_2$ et $H_2O$, au moyen de $H_2O_2$.

Mais les rendements sont faibles, en outre, l'eau oxygénée se décompose en présence de brome selon la réaction :

$$Br_2 + H_2O_2 \rightarrow O_2 + 2Br^- + 2H^{+-}$$

Dans la demande FR 2283089, il a été proposé d'obvier cet inconvénient en utilisant un dispositif permettant la séparation du brome libéré au fur et à mesure de sa formation. Cette façon d'opérer a été appliquée tout particulièrement au traitement de solutions bromhydriques dites "bromosulfuriques", ne contenant pas ou peu de composés organiques qui diminueraient d'autant le rendement d'oxydation.

On a maintenant trouvé un procédé permettant d'abaisser, voire supprimer, la teneur en matières organiques des effluents bromurés en vue de valoriser les bromures contenus dans lesdits effluents en brome élémentaire ; lesdits effluents, si solides, pouvant être solubilisés dans l'eau.

L'invention a donc pour objet un procédé d'abaissement de la teneur en matières organiques et en produits azotés contenus dans un effluent bromuré se présentant sous forme d'une solution aqueuse bromurée ou d'un solide bromuré en vue notamment de valoriser les bromures contenus dans ledit effluent en brome élémentaire, ledit procédé étant caractérisé en ce que l'on soumet ledit effluent bromuré à un ou plusieurs traitements physicochimiques choisis parmi :

a) l'acidification d'une solution aqueuse bromurée ou d'une solution obtenue par mise en solution si l'effluent bromuré est solide suivi d'un entraînement à la vapeur des composés organiques légers ;

b) la basification de la solution obtenue en a) ou bien de la solution aqueuse bromurée initiale obtenue par mise en solution si l'effluent bromuré est solide suivi d'un entraînement à la vapeur des composés organiques aminés légers et/ou de $NH_3$ ;

c) l'entraînement à la vapeur de composés organiques légers de la solution aqueuse obtenue en a), ou bien de la solution obtenue en b), ou bien d'une solution bromurée initiale obtenue par mise en solution si l'effluent est solide, sans modification de pH ;

d) le lavage d'un effluent bromuré solide à traiter ou bien d'un solide provenant de l'évaporation d'une solution aqueuse bromurée résultant (éventuellement) d'un (ou de plusieurs) traitement(s) précédent a), b), et/ou c) avec un solvant organique solubilisant le minimum de bromures alcalins et le maximum de composés organiques, et filtration de la suspension obtenue. Le gâteau, lavé et séché, est résolubilisé dans de l'eau.

A titre de solvants organiques utilisables selon la présente invention, on citera l'acétonitrile, le butanol secondaire, l'isapropanol, l'acétone...

De préférence, on utilisera l'isopropanol.

La solution aqueuse bromurée ainsi obtenue, dépourvue de la quasi totalité de ses matières organiques, présentant de préférence une teneur en COT au plus égale à 2 000 mg/l et une teneur en azote au plus égale à 50 mg/l, peut être soumise à un procédé connu de valorisation des bromures en brome élémentaire. De préférence, on utilisera le procédé d'oxydation par le chlore tel que précédemment décrit.

L'effluent bromuré traité selon l'invention peut être également valorisé dans les domaines de la photographie, de la gravure, de la lithographie et en thérapeutique.

Selon la présente invention, on détermine dans un premier temps, la teneur en COT et la teneur en azote total de l'effluent bromuré à valoriser.

La teneur en COT est déterminée selon une méthode par combustion d'un échantillon et analyse infra-rouge du $CO_2$ résultant (NDIR, non-dispersive infrared gas analyzer). Les résultats sont exprimés en mg/l de COT ramenés à une solution aqueuse contenant 300 g/l de bromures.

L'azote total est déterminé par minéralisation d'un échantillon de l'effluent bromuré et le dosage en retour de $NH_3$ formé selon la méthode générale dite de Kjeldahl. Les résultats sont exprimés en mg/l d'azote ramenés à une solution aqueuse contenant 300 g/l de bromures.

Ensuite, il appartient à l'homme du métier ayant connaissance de la provenance de ladite solution aqueuse bromurée à valoriser, et donc une connaissance qualitative des composés organiques présents, d'appliquer dans un ordre logique et d'une manière aussi économique que possible les différents traitement du procédé de la présente invention en vue d'en abaisser le plus possible la teneur en COT et la teneur en azote total.

Ainsi, selon la présente invention, et dans le cas le plus général, l'effluent bromuré peut être soumis à un ou plusieurs traitements a), b), c) ou d) précédemment mentionnés dans l'ordre a), b), c), d), ou dans un ordre quelconque en fonction de la nature des matières organiques et produits azotés présents à éliminer et de la forme de l'effluent bromuré à traiter.

Ainsi, par exemple, dans l'éventualité où l'effluent bromuré contient seulement des composés organiques acides légers, on le soumettra seulement au traitement a).

Dans l'éventualité où il contient également des composés azotés légers et/ou de l'ammoniaque, la solution obtenue en a) subira le traitement b).

Selon la présente invention, le procédé s'applique donc indifféremment à des solutions aqueuses bromurées ou à des solides bromurés.

En effet, si l'effluent se trouve être sous forme solide, il pourra être soumis directement au traitement d) (lavage au solvant) ou solubilisé dans l'eau avant d'être traité selon a), b) et/ou c) du procédé de l'invention.

Ainsi, selon la présente invention, si l'effluent bromuré est solide, on pourra procéder à sa mise en solution par addition d'eau, à température ambiante de manière à obtenir une solution aqueuse contenant de 100 à 500 g/l de bromures, et préférentiellement contenant une quantité de bromures voisine de 300 g/l.

Selon la présente invention, l'acidification de la solution bromurée-traitement a) - peut être effectuée avec une quantité suffisante d'un acide minéral tel que $H_2SO_4$, HCl, $H_3PO_4$ ou HBr de manière à obtenir un pH au plus égal à 3. Avantageusement, on utilisera de l'HBr dit résiduaire (sous-produit lors de la synthèse d'un dérivé bromé, par exemple).

La basification - traitement b) - de la solution bromurée peut être effectuée par un agent alcalin tel que NaOH ou KOH utilisé en une quantité suffisante de manière à obtenir un pH au moins égal à 10.

Selon la présente invention, l'entraînement à la vapeur est effectuée par injection d'eau ou de vapeur d'eau dans la solution bromurée acide, basique ou neutre maintenue à une température au moins égale à 100°C, à pression atmosphérique.

L'évaporation de la solution bromurée pour obtenir un solide (qui sera traité selon d)) peut être effectuée par distillation sous pression réduite à des températures comprises entre 20°C et 100°C.

La filtration du concentrat peut être effectué en continu durant le traitement d'évaporation en utilisant un système de filtration adapté.

Le lavage au solvant organique du gâteau de bromures solides peut être effectué directement sur le filtre ou sur le gâteau débâti en suspension dans le solvant sous agitation.

Le séchage du gâteau peut être effectué par passage d'air ou autre gaz chauffé à des température au moins égale à 30°C.

Les solvants des lavages des bromures solides peuvent être recyclés après purification par distillation ou tout autre procédé adéquat.

Le procédé de la présente invention permet de traiter tout effluent bromuré solide ou liquide pouvant contenir de fortes teneurs en matières organiques et/ou également des teneurs élevées en produits azotés et présente l'avantage de conduire à une solution aqueuse bromurée, de concentration en bromure alcalin comprise entre 100 g/l et 500 g/l et, de préférence voisine de 300 g/l et contenant au plus 2000 mg/l de COT et au plus 50 mg/l d'azote total. Cette solution est directement valorisable en brome élémentaire au moyen d'une installation existante d'oxydation par le chlore (tour de brome).

Les exemples qui suivent illustrent l'invention.

Les teneurs en COT et azote total ont été déterminées comme précédemment décrit. La teneur en COT a été réalisée sur un appareil "Shimadzu TOC CONTROL", référencé 5050 A.

**EXEMPLE 1** :

**Traitement d'une solution aqueuse bromurée basique contenant de l'ammoniaque :**

Une solution de NaBr provenant de la fabrication d'un intermédiaire pharmaceutique à la composition moyenne suivante :

Teneur en bromure : environ 300 g/l,
pH = 13
$NH_3$ : 15 à 16 g/l,
Azote total : de 12 à 13 g/l,
COT : 17 à 18 g/l provenant essentiellement de la présence dans ladite solution d'éthanol : ~ 0,1 %, d'éthoxyéthanol : 2 à 3 %, d'acide valérique : 0,3 à 0,4 %, de valéronitrile et de toluène.

100 kg de cette solution aqueuse bromurée basique sont directement soumise à un entraînement à la vapeur d'eau. On récupère en tête de condenseur 50 à 60 kg de gaz ammoniac ($NH_3$) qui est neutralisé par une solution d'$H_2SO_4$.

Les condensats obtenus, ayant une teneur en COT de 22 g/l, sont constitués essentiellement d'éthoxyéthanol, de valéronitrile et de toluène en solution aqueuse.

Le pied de réacteur contenant la solution traitée à une teneur en COT de 1,85 g/l et une teneur en azote égale à 6 mg/l.

Cette solution peut donc déjà être oxydée en vue d'obtenir du brome sans risque particulier de formation de produits explosifs, tels que NBr3.

Cet exemple illustre l'invention par le fait que l'on a appliqué le traitement c) à une solution aqueuse bromurée en vue de sa valorisation en brome élémentaire.

La valorisation en brome élémentaire à partir de la solution aqueuse bromurée traitée selon la présente invention peut être réalisée par oxydation au moyen de chlore comme décrit précédemment.

Toutefois, en vue de diminuer encore la teneur en COT, on applique à la solution précédemment traitée un traitement supplémentaire.

La solution précédemment traitée contient encore 1,85 g/l de COT, correspondant essentiellement au sel de sodium de l'acide valérique.

Cette solution présentant un pH de 13 est acidifiée au moyen d'$H_2SO_4$ jusqu'à obtention d'un pH de 3.

Cette solution ainsi acidifiée est soumise à un entraînement à la vapeur d'eau ce qui permet de recueillir dans le distillat l'acide valérique libéré au moment de l'acidification.

La solution aqueuse bromurée (NaBr) ainsi traitée présente une teneur en COT de 0,5 g/l et est tout à fait acceptable pour une valorisation directe en brome élémentaire par le procédé d'oxydation par le chlore.

Cet exemple illustre bien l'invention par le fait que l'on a appliqué deux traitements : c) et a) à une solution aqueuse bromurée basique en vue de sa valorisation en brome élémentaire.

En outre, du fait que la solution initiale à traiter est basique, l'homme du métier a appliqué logiquement d'abord l'étape c) puis l'étape a), ce qui démontre bien qu'il appartient à l'homme du métier qui a connaissance de la provenance de la solution aqueuse bromurée et donc de sa composition, d'appliquer les différents traitements du procédé dans l'ordre permettant d'abaisser au mieux et d'une manière économique la teneur en COT et d'éliminer la quasi totalité des espèces azotées.

**EXEMPLE 2** :

**Traitement d'une solution aqueuse bromurée provenant de la synthèse d'un intermédiaire pharmaceutique présentant les caractéristiques ci-après** :

pH = 6,3,
Bromures : 504 g/l,
Azote total $\leq$ 30 mg/l,
COT = 11,4 g/l.

On applique à un échantillon de cette solution un traitement non conforme à l'invention qui consiste à effectuer une extraction liquide/liquide par du $CH_2Cl_2$. L'analyse par chromatographie en phase gazeuse du solvant après extraction révèle que très peu de composés organiques présent ont été éliminés.

Application du traitement a) selon l'invention:

Un echantyllon de la solution aqueuse bromuree brute (initiale) est soumis à une acidification avec $H_2SO_4$ jusqu'à obtention d'un pH égal à 3.

La solution ainsi acidifiée est soumise à un entraînement à la vapeur d'eau.

La solution ainsi traitée, diluée de façon à amener la concentration en bromures égale à 300 g/l, présente les caractéristiques suivantes :

pH = 3,
COT = 6g/l, pour mémoire Br- = 300 g/l.

Dans ce cas précis, le traitement a) en milieu acide seul ne permet pas d'éliminer suffisamment de composés organiques pour atteindre une teneur en COT au plus égale à 2 g/l .On enchaîne donc le traitement d).

Un échantillon de la solution acide précédente est évaporé à sec de manière à obtenir un résidu solide (qui présente une coloration jaune) qui sera désigné ci-après par SOLIDE BRUT qui présente toujours une teneur en COT de 6 g/l ramenée à une solution de 300 g/l de bromures.

Le SOLIDE BRUT précédemment obtenu est soumis à un lavage à l'acétone :

30,2 g du SOLIDE BRUT sont mis en suspension dans 40 ml d'acétone et maintenus sous agitation pendant 30 minutes puis on filtre la suspension acétonique.

Le filtrat est écarté et le gâteau est soumis à un second lavage avec 40 ml d'acétone selon les conditions précédentes.

Après filtration, le gâteau obtenu est séché à l'air chaud à 40°C, on récupère finalement 28,3 g de NaBr sec dont la teneur en COT est encore de 2,1 g/l (ramenée à une solution aqueuse dans l'eau à 300 g/l de Br⁻).

Le lavage à l'acétone conduit à une solution aqueuse bromurée présentant une teneur en COT tout juste acceptable pour son oxydation par la méthode au chlore.

Un traitement du SOLIDE BRUT avec de l'isopropanol dans les mêmes conditions décrites précédemment permet d'obtenir une solution aqueuse bromurée qui, à 300 g/l de bromures présente une teneur en COT égale à 1,6 g/l.

Le produit ainsi obtenu permet d'appliquer le procédé d'oxydation au chlore en vue de récupérer le brome élémentaire.

**EXEMPLE 3** :

**Traitement d'une solution aqueuse de KBr provenant de la synthèse d'un intermédiaire pharmaceutique présentant les caractéristiques suivantes :**

pH = 6,9,
COT = 21,5 g/l,
Azote total : 3,3 g/l,

Les traitements d'extraction liquide/liquide (tel que pratiqué dans l'exemple 2) ou d'entraînement à la vapeur selon le procédé de l'invention n'ont pas permis d'éliminer les organiques présents dans cette solution.

Une évaporation à sec de cette solution permet d'obtenir un solide brut dont les caractéristiques sont (après mise en solution à 300 g/l pour déterminer la COT) les suivantes :

COT =2,1 g/l,
Azote total = 3,5 g/l provenant essentiellement d'un sel d'ammonium quaternaire.

Le distillat obtenu lors de l'évaporation à sec présente une teneur en COT de 1,3 g/l et une teneur en azote total de 43,3 mg/l.

**Traitement selon d) : lavage du solide brut :**

1/ Lavage à l'acétone :

100 g de solide brut précédemment obtenu sont lavés deux fois avec 50 ml d'acétone puis séchés à l'air chaud.

Le filtrat acétonique récupéré contient environ 0,46 % en poids de bromures alors que le gâteau séché permet d'obtenir, après mise en solution à 300 g/l de bromures, une solution aqueuse de KBr ayant les caractéristiques suivantes :

COT = 0,68 g/l,
Azote total = 0,96 g/l.

Cette solution aqueuse de KBr ne peut être soumise à une oxydation par le chlore, car elle a une teneur en azote totale supérieur à 50 mg/l (risque de formation de $NBr_3$ explosif).

2/ Lavage à l'isopropanol :

100 g de solide brut sont lavés deux fois avec 50 ml d'isopropanol puis séchés à l'air chaud.

Le filtrat isopropanolique récupéré contient environ 1,6 % en poids de bromures.

Le gâteau séché permet d'obtenir après mise en solution à 300 g/l de bromures, une solution aqueuse de KBr ayant les caractéristiques suivantes :

COT = 142 mg/l,
Azote total = 20 mg/l.

Cette solution est donc apte à être soumise à une oxydation par le chlore en vue d'obtenir le brome élémentaire.

**Revendications**

1. Procédé d'abaissement de la teneur en matières organiques et en produits azotés contenus dans un effluent bromuré se présentant sous forme d'une solution aqueuse bromurée ou d'un solide bromuré, **caractérisé en ce que** l'on soumet ledit effluent bromuré à un ou plusieurs traitements physicochimiques choisis parmi :

a) l'acidification d'une solution aqueuse bromurée ou d'une solution obtenue par mise en solution si l'effluent bromuré est solide suivi d'un entraînement à la vapeur des composés organiques légers ;

b) la basification de la solution obtenue en a) ou bien de la solution aqueuse bromurée initiale obtenue par mise en solution si l'effluent bromuré est solide suivi d' un entraînement à la vapeur des composés organiques aminés légers et/ou de $NH_3$ ;

c) l'entraînement à la vapeur de composés organiques légers de la solution aqueuse obtenue en a), ou bien de la solution obtenue en b), ou bien d'une solution bromurée initiale obtenue par mise en solution si l'effluent est solide, sans modification de pH ;

d) le lavage d'un effluent bromuré solide à traiter ou bien d'un solide provenant de l'évaporation d'une solution aqueuse bromurée résultant d'un ou plusieurs traitement(s) précédent(s), avec un solvant organique, filtration de la suspension obtenue, lavage et séchage du gâteau obtenu.

2. Procédé selon la revendication 1, **caractérisé en ce que** l'effluent bromuré est soumis à un ou plusieurs traitement(s) a), b), c) ou d), dans l'ordre a), b), c), d) ou dans un ordre quelconque en fonction de la nature des matières organiques et produits azotés présents à éliminer et de la forme de l'effluent bromuré à traiter.

3. Procédé selon l'une des revendications 1 ou 2, **caractérisé en ce que** le solvant organique utilisé dans le traitement d) est choisi parmi les solvants qui solubilisent le minimum de bromures et le maximum de matières organiques et produits azotés.

4. Procédé selon la revendication 3, **caractérisé en ce que** le solvant organique utilisé dans le traitement d) est choisi parmi l'acétonitrile, le butanol secondaire, l'isopropanol, l'acétone.

5. Procédé selon la revendication 4, **caractérisé en ce que** le solvant organiques est l'isopropanol.

6. Procédé selon l'une des revendications 1 ou 2, **caractérisé en ce que** l'acidification de la solution bromurée -traitement a)- est effectué avec une quantité suffisante d'un acide minéral de manière à obtenir un pH au plus égal à 3.

7. Procédé selon l'une des revendications 1 ou 2, **caractérisé en ce que** la basification de la solution bromurée -traitement b)- est effectuée avec une quantité suffisante d'un agent alcalin de manière à obtenir un pH au moins égal à 10.

8. Procédé selon l'une des revendications 1 ou 2, **caractérisé en ce que** l'entraînement à la vapeur de la solution bromurée acide, basique ou neutre est effectuée par injection d'eau ou de vapeur d'eau dans ladite solution bromurée maintenue à une température au moins égale à 100°C, à pression atmosphérique.

9. Utilisation du procédé selon l'une quelconque des revendications 1 à 8, pour traiter tout effluent bromuré solide ou liquide contenant de fortes teneurs en matières organiques et/ou des teneur élevées en produits azotés.

10. Solution aqueuse bromuré de concentration en bromures alcalin comprise entre 100 g/l et 500 g/l et, de préférence, voisin de 300 g/l, obtenue selon l'une quelconque des revendications 1 à 8, ayant une teneur en COT au plus égale à 2 000 mg/l et une teneur en azote total au plus égale à 50 mg/l.

11. Utilisation de la solution aqueuse bromurée selon la revendication 10 pour la valorisation des bromures alcalin en brome élémentaire.

Office européen
des brevets

**RAPPORT DE RECHERCHE EUROPEENNE**

Numéro de la demande

EP 03 29 2119

| | **DOCUMENTS CONSIDERES COMME PERTINENTS** | | |
|---|---|---|---|
| Catégorie | Citation du document avec indication, en cas de besoin, des parties pertinentes | Revendication concernée | CLASSEMENT DE LA DEMANDE (Int.Cl.7) |
| D,A | US 5 385 650 A (DADGAR AHMAD ET AL) 31 janvier 1995 (1995-01-31) * revendications 1,2,5-7,9 * * colonne 2, ligne 26 - colonne 3, ligne 23 * * colonne 5, ligne 33-44 * * colonne 6, ligne 14-41 * * colonne 15, ligne 61 - colonne 16, ligne 4 * * exemples * | 1-11 | C01D3/14 C01B7/09 C01B9/04 C02F1/10 C02F1/66 B01D11/02 B01D3/38 |
| | --- | | |
| A | FR 2 735 404 A (SARP IND) 20 décembre 1996 (1996-12-20) * le document en entier * * revendications 1-3,9 * | 1-10 | |
| | --- | | |
| A | WO 96 08445 A (ALLIED SIGNAL INC) 21 mars 1996 (1996-03-21) * revendications 1-3 * * page 2, ligne 27 - page 3, ligne 11 * * page 6, ligne 31-36 * * exemples 1-4 * | 1-10 | **DOMAINES TECHNIQUES RECHERCHES (Int.Cl.7)** |
| | --- | | C01D C01B B01D C02F |
| A | DE 43 24 410 C (ENVIRO CONSULT INGENIEURGESELL) 4 août 1994 (1994-08-04) Resumé * revendication 1 * | 1-10 | |
| | --- | | |
| A | US 4 801 356 A (GRASSO ALBERT P) 31 janvier 1989 (1989-01-31) Resumé * revendication 1 * | 1-10 | |
| | ---  -/-- | | |

Le présent rapport a été établi pour toutes les revendications

| Lieu de la recherche | Date d'achèvement de la recherche | Examinateur |
|---|---|---|
| MUNICH | 26 janvier 2004 | Rhodes, K |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
 
& : membre de la même famille, document correspondant

EPO FORM 1503 03.82 (P04C02)

Office européen
des brevets

**RAPPORT DE RECHERCHE EUROPEENNE**

Numéro de la demande

EP 03 29 2119

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| A | EP 1 153 887 A (TOSOH CORP) 14 novembre 2001 (2001-11-14) * revendication 1 * * alinéas [0008]-[0010] * * alinéas [0013]-[0018], [0027] * * exemples 1-6 * ----- | 1-10 | |

DOMAINES TECHNIQUES RECHERCHES (Int.Cl.7)

Le présent rapport a été établi pour toutes les revendications

| Lieu de la recherche | Date d'achèvement de la recherche | Examinateur |
|---|---|---|
| MUNICH | 26 janvier 2004 | Rhodes, K |

## ANNEXE AU RAPPORT DE RECHERCHE EUROPEENNE
## RELATIF A LA DEMANDE DE BREVET EUROPEEN NO.

EP 03 29 2119

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

26-01-2004

| Document brevet cité au rapport de recherche | | Date de publication | Membre(s) de la famille de brevet(s) | | Date de publication |
|---|---|---|---|---|---|
| US 5385650 | A | 31-01-1995 | AU | 6819794 A | 21-11-1994 |
| | | | WO | 9425643 A1 | 10-11-1994 |
| FR 2735404 | A | 20-12-1996 | FR | 2735404 A1 | 20-12-1996 |
| WO 9608445 | A | 21-03-1996 | AU | 3587395 A | 29-03-1996 |
| | | | CA | 2199723 A1 | 21-03-1996 |
| | | | WO | 9608445 A2 | 21-03-1996 |
| DE 4324410 | C | 04-08-1994 | DE | 4324410 C1 | 04-08-1994 |
| US 4801356 | A | 31-01-1989 | JP | 1140564 A | 01-06-1989 |
| | | | JP | 2685839 B2 | 03-12-1997 |
| EP 1153887 | A | 14-11-2001 | JP | 2002029737 A | 29-01-2002 |
| | | | EP | 1153887 A2 | 14-11-2001 |
| | | | US | 2001053345 A1 | 20-12-2001 |

EPO FORM P0460

Pour tout renseignement concernant cette annexe : voir Journal Officiel de l'Office européen des brevets, No.12/82